(19) Europäisches Patentamt
European Patent Office
Office européen des brevets

(11) **EP 2 441 108 B1**

(12) **EUROPEAN PATENT SPECIFICATION**

(45) Date of publication and mention
of the grant of the patent:
**02.07.2014 Bulletin 2014/27**

(51) Int Cl.:
***H01M 4/92*** (2006.01)

(21) Application number: **09787972.0**

(22) Date of filing: **10.06.2009**

(86) International application number:
**PCT/JP2009/060981**

(87) International publication number:
**WO 2010/143311 (16.12.2010 Gazette 2010/50)**

(54) **METHOD FOR PRODUCING ELECTRODE CATALYST FOR FUEL CELL**

PROZESS UM EINEN ELEKTRODENKATALYSATOR FÜR BRENNSTOFFZELLE HERZUSTELLEN

PROCÉDÉ POUR RÉALISER UN CATALYSEUR D'ÉLECTRODE POUR PILE À COMBUSTIBLE

(84) Designated Contracting States:
**AT BE BG CH CY CZ DE DK EE ES FI FR GB GR HR HU IE IS IT LI LT LU LV MC MK MT NL NO PL PT RO SE SI SK TR**

(43) Date of publication of application:
**18.04.2012 Bulletin 2012/16**

(73) Proprietors:
• **TOYOTA JIDOSHA KABUSHIKI KAISHA Toyota-shi, Aichi-ken, 471-8571 (JP)**
• **Helmholtz-Zentrum Berlin für Materialien und Energie GmbH 14109 Berlin (DE)**

(72) Inventors:
• **TAKAHASHI, Hiroaki Toyota-shi, Aichi-ken, 471-8571 (JP)**
• **HERRMANN-GEPPERT, Iris 22043 Hamburg (DE)**
• **ZEHL, Gerald Berlin 12435 (DE)**
• **BOGDANOFF, Peter Berlin 14193 (DE)**
• **FIECHTER, Sebastian Berlin 14109 (DE)**

(74) Representative: **Kuhnen & Wacker Patent- und Rechtsanwaltsbüro Prinz-Ludwig-Straße 40A 85354 Freising (DE)**

(56) References cited:
**EP-A1- 1 811 594      WO-A2-03/061827**
**JP-A- 2005 263 531      US-A1- 2008 292 912**

• JAOUEN F ET AL: "Oxygen reduction catalysts for polymer electrolyte fuel cells from the pyrolysis of iron acetate adsorbed on various carbon supports" JOURNAL OF PHYSICAL CHEMISTRY. B, MATERIALS, SURFACES, INTERFACES AND BIOPHYSICAL, WASHINGTON, DC, US, vol. 107, no. 6, 13 February 2003 (2003-02-13), pages 1376-1386, XP002981717 ISSN: 1089-5647
• ZENGCAI LIU ET AL: "Synthesis of Pt3Co Alloy Nanocatalyst via Reverse Micelle for Oxygen Reduction Reaction in PEMFCs", TOPICS IN CATALYSIS, KLUWER ACADEMIC PUBLISHERS-PLENUM PUBLISHERS, NE, vol. 49, no. 3-4, 30 May 2008 (2008-05-30) , pages 241-250, XP019616080, ISSN: 1572-9028

**Description**

Technical Field

The present invention relates to a method for production of an electrode catalyst used for a fuel cell and having excellent catalytic activity.

Background Art

In a fuel cell, since hydrogen electrochemically reacts with oxygen to generate electricity, a product in association with electricity generation is in principle only water. A fuel cell has therefore drawn attention as a clean electricity generation system that imposes almost no burden on the earth environment.

Fuel cells are classified in terms of the type of electrolyte into a polymer electrolyte fuel cell (PEFC), a phosphoric acid fuel cell (PAFC), a molten carbonate fuel cell (MCFC), and a solid oxide fuel cell (SOFC).

A polymer electrolyte fuel cell uses, as the electrolyte, an ion-exchange polymer electrolyte membrane that conducts protons. Specifically, a pair of electrodes, each of which comprises a catalyst layer and a gas diffusion layer, is provided in such a way that they sandwich a polymer electrolyte membrane. A hydrogen-containing fuel gas is supplied to one of the electrodes (fuel electrode: anode) and an oxygen-containing oxidant is supplied to the other electrode (air electrode: cathode) to produce electromotive force.

An oxidation reaction expressed by the following equation (1) proceeds on the anode side, and a reduction reaction expressed by the following equation (2) proceeds on the cathode side. The reaction expressed by the equation (3) proceeds as a whole to supply electromotive force to an external circuit.

$$H_2 \rightarrow 2H^+ + 2e^- \qquad (1)$$

$$(1/2)O_2 + 2H^+ + 2e^- \rightarrow H_2O \qquad (2)$$

$$H_2 + (1/2)O_2 \rightarrow H_2O \qquad (3)$$

The cell characteristics of a polymer electrolyte fuel cell have been drastically improved by the following and other advances: (1) A polymer electrolyte membrane having high ion conductivity has been developed, and (2) Catalyst-supporting carbon coated with an ion-exchange resin (polymer electrolyte) made of a material that is the same as or different from that of the polymer electrolyte membrane is used as a constituent material of the electrode catalyst layer to form what is called a three-dimensional reaction site in the catalyst layer. In addition to the excellent cell characteristics described above, the polymer electrolyte fuel cell is characterized in that a wide operating temperature range from room temperature to 100°C allows quick start, and high output power density allows the cell to be readily smaller and lighter. From the characteristics described above, the polymer electrolyte fuel cell is expected to be put in practical use as a power source for an automobile and a power supply for a small cogeneration system and other fixed systems.

As described above, an electrode used in a polymer electrolyte fuel cell comprises a catalyst layer which contains catalyst-supporting carbon carriers, and a gas diffusion layer which not only supplies reaction gas to the catalyst layer but also collects electrons. The catalyst layer has open areas comprising micropores formed in surface of carbon particles or between the particles, which are used as carriers. When platinum or other noble metal catalysts are supported on carbon carriers, a size of each catalyst particle greatly depends on the specific surface area of the carbon carriers and the density of the metal catalyst supported thereon. That is, increase in the specific surface area of the carbon carriers due to the presence of the open areas may allow smaller catalyst particles to be supported in a highly dispersed manner, provided that the amount of catalyst supported thereon remains the same. On the other hand, under a condition of a low-specific surface area of the carbon carriers and/or a high density of the metal catalyst supported thereon, the size of the catalyst particles may increase, resulting in a reduced number of active points and hence reduction in catalytic activity.

Platinum, platinum alloys, or other noble metal catalysts are typically used as the catalyst. Such noble metals are expensive, and the amount of noble metal used may be considered as a crucial factor that directly relates to the manufacturing cost of the fuel cell.

Carbon carriers having platinum supported thereon are typically manufactured by immersing and dispersing carriers, such as carbon black, in a solution of platinum salt or complex thereof and heat-treating the mixed solution at a high temperature. It is believed, however, that the method is problematic in that the heat treatment at a high temperature may allow platinum to move along surface of carbon carriers and sinter, resulting in increasing the size of the platinum particles.

A variety of methods have been disclosed to address the above problem. Patent Document 1 disclosed a method for producing catalyst-supporting conductive carbon particles by forcing conductive fine particles to flow through a dry atmosphere and spraying a metal-catalyst-containing solution or a metal-catalyst-dispersed solution into the atmosphere. Patent Document 2 disclose a method in which carbon powder is dispersed in a solution of platinum complex ion, an aliquot of a buffer solution is added thereto and then the platinum complex ions on the carbon carriers are reduced by using a reducing agent so as to produce metal platinum particles supported thereon. Patent Document 3 disclose a method in which carbon black that has undergone ultrasonic treatment in a palladium solution is brought to come into contact with a plating solution containing platinum chloride and ammonium ions of which the pH is adjusted to 10 or higher by using sodium hydroxide, and hydrazine (reducing agent) is added to the plating solution so that the platinum is reduced and precipitated on surface of the carbon black particles in electroless plating.

Patent Document 1: JP Patent Publication (Kokai) No. 2003-242987
Patent Document 2: JP Patent Publication (Kokai) No. 2004-335252
Patent Document 3: JP Patent Publication (Kokai) No. 2006-346571

The publication "Oxygen reduction catalysts for polymer electrolyte fuel cells from the pyrolysis of iron acetate adsorbed on various carbon supports" from OURNAL OF PHYSICAL CHEMISTRY. B, MATERIALS, SURFACES, INTERFACES AND BIOPHYSICAL, WASHINGTON, DC, US, vol. 107, no. 6, 13 February 2003 (2003-02-13), pages 1376-1386, ISSN: 1089-5647 written by JAOUEN F ET AL describes a method for producing an electrode catalyst for a fuel cell, the method comprising: an ammonia treatment step of heat-treating carbon carriers in an ammonia gas atmosphere; an iron salt contact step of mixing the carbon carriers treated with ammonia with a solution prepared by dissolving a metal salt in a solvent and bringing the metal salt coming into contact with the carbon carriers in the mixture that has been formed; a recovery step of recovering the carbon carriers by removing the solvent from the mixture; and a heat treatment step of heat-treating the recovered carbon carriers in a reducing gas atmosphere.

Disclosure of the Invention

The method in which carbon carriers are dispersed in a platinum salt solution and then heat-treated at a high temperature is more advantageous than the other alternative manufacturing methods that have been developed in that the quality of the obtained electrode catalyst is stable because the manufacturing processes are simple. However, as described above, it is known that the method suffers from a phenomenon in which sintering increases the size of platinum particles. The phenomenon is believed to occur in the following mechanism: When the number of platinum adsorption sites on surface of each carbon carrier is small, the platinum salt or platinum complex cannot be uniformly dispersed or distributed over the surface thereof during holding of the platinum salt on the carriers. The platinum particles therefore aggregate at the adsorption sites during the heat treatment. As a result, the platinum particles grow into larger ones.

When the sintering increases the size of the platinum particles, the reaction surface area of each of the platinum particles is reduced, disadvantageously leading to insufficient catalytic activity and reduction in cell voltage. Accordingly, an object of the present invention is to provide carbon carriers having fine platinum particles supported thereon as an electrode catalyst used in a fuel cell, and a method for production thereof.

To solve the problem described above, the present inventors have conducted intensive studies and found that a treatment of a carbon powder with ammonia gas allows fine platinum particles to be supported thereon.. The present inventors have thus attained the present invention.

The present invention is a method according to claim 1 for producing an electrode catalyst for a fuel cell, the method comprising:

an ammonia treatment step of heat-treating carbon carriers in an ammonia gas atmosphere;
a platinum salt contact step of mixing the carbon carriers treated with ammonia with a solution prepared by dissolving a platinum salt in a solvent and bringing the platinum salt coming into contact with the carbon carriers in the mixture that has been formed;
a recovery step of recovering the carbon carriers by removing the solvent from the mixture; and
a heat treatment step of heat-treating the recovered carbon carriers in an inert gas atmosphere.

The ammonia treatment step preferably includes the step of holding the carbon carriers at a temperature ranging from 600 to 1000°C for 10 to 120 minutes in the ammonia gas atmosphere, depending on the used carbon carrier.

The platinum salt contact step preferably includes a process in which the mixture undergoes ultrasonic treatment.

The heat treatment step preferably includes the step of treating the carbon carriers recovered in the recovery step at a temperature ranging from 200 to 800°C for 10 to 120 minutes in the inert gas atmosphere in order to form catalytically active platinum particles.

The platinum salt is preferably platinum (II) acetylacetonate.

The method of the present invention results in an electrode catalyst for a fuel cell, the electrode catalyst comprising carbon carriers having platinum particles supported thereon, wherein the platinum particles has a density of the platinum particles supported thereon ranging from 10 to 60 wt% and an average size thereof ranging from 1.0 to 6.0 nm, and the electrode catalyst has an electrochemical surface area of platinum particles ranging from about 10000 to 40000 $cm^2 {}_{Pt}/g {}_{catalyst}$.

Brief Description of the Drawings

Figure 1 shows X-ray diffraction (XRD) pattern of a carbon powder having platinum particles supported thereon which has been treated with (Example 1) or without (Comparative Example 1) ammonia.
Figure 2 shows Tafel plot of a measured current-voltage characteristic using electrode catalysts produced based on the carbon powder having platinum particles supported thereon which has been treated with (Example 2) or without (Comparative Example 2) ammonia.

Best Mode for Carrying Out the Invention

A preferred embodiment of the present invention will be described below in detail.

1. Electrode catalyst

An electrode catalyst for a fuel cell of the present invention has a construction in which platinum particles are supported on each carbon carrier.
A density of platinum particles supported on carbon carriers in an electrode catalyst is defined by a ratio of a weight of the platinum particles supported thereon to total weight of the electrode catalyst, the ratio expressed as a percentage. Such density may be calculated by dissolving platinum supported on carbon carriers followed by measuring the concentration of the dissolved platinum. In the electrode catalyst for a fuel cell of the present invention, the density of platinum particles supported on carbon carriers preferably ranges from 10 to 60 wt%.
Provided that the weight of platinum supported on carbon carriers in an electrode catalyst is fixed, the smaller the size of the resultant platinum particles, the larger the surface area of the platinum particles relative to the weight of the electrode catalyst. Therefore, the average size of the platinum particles is preferably small. In the electrode catalyst for a fuel cell of the present invention, the average size of the platinum particles preferably ranges from 1.0 to 6.0 nm.
A size of platinum particles supported on carbon carriers in an electrode catalyst is calculated in accordance with XRD measurement known in the art. That is, the size of platinum particles supported on carbon carriers in an electrode catalyst can be calculated by performing XRD measurement on the electrode catalyst and determining full width at half maximum of peak that corresponds to Pt (111) detected at approximately 40 degrees.
A surface area of platinum particles supported on carbon carriers in an electrode catalyst can be defined as an electrochemical surface area of the platinum particles that would be present per gram of the electrode catalyst. In the electrode catalyst for a fuel cell of the present invention, the electrochemical surface area of platinum particles per gram of the electrode catalyst preferably ranges from 10000 to 40000 $cm^2 {}_{Pt}/g {}_{catalyst}$.
An electrochemical surface area of platinum particles in an electrode catalyst is given by an electrochemical analysis. For example, the electrochemical surface area of platinum particles in an electrode catalyst may be calculated from $H_2$ desorption peak obtained by CV measurement known in the art.
The electrode catalyst of the present invention having a large electrochemical surface area of platinum and excellent catalytic activity, when used in a fuel cell, allows increase in electricity generation efficiency and reduction in the amount of platinum usage.

2. Method for producing electrode catalyst

A method for producing electrode catalyst for a fuel cell of the present invention includes the steps of: heat-treating carbon carriers in an ammonia gas atmosphere (ammonia treatment step); mixing the carbon carriers treated with ammonia with a solution prepared by dissolving a platinum (Pt) salt in a solvent, and bringing the platinum salt coming into contact with the carbon carriers in the mixture that has been formed (platinum salt contact step); removing the solvent from the mixture and thereby recovering the carbon carriers (recovery step); and heat-treating the recovered carbon carriers in an inert gas atmosphere (heat treatment step).
It is believed that some functional groups derived from ammonia are introduced to carbon carriers in the ammonia treatment step. It is speculated that the functional groups on carbon carriers exhibit a chemical adsorption effect on platinum salt and thereby the platinum salt would be strongly adsorbed to surface of the carbon carriers in the following platinum salt contact step.

The platinum salt supported on the carbon carriers is thermally reduced into metallic platinum in the heat treatment step. In this step, if sintering occurs, in which adjacent platinum salt particles move along surface of carriers and aggregate, the size of the resultant platinum particles would increase. In the method for production of the present invention, however, it is speculated that an adsorption effect resulting from chemical properties of surface of carbon carriers containing some functional groups which have been introduced in the ammonia treatment step would cause platinum salt to be strongly adsorbed to the carbon carriers. The sintering will therefore be suppressed in the heat treatment step, resulting in fine platinum particles being obtained.

As described above, according to the method for production of the present invention, an electrode catalyst having fine platinum particles supported on carbon carriers can be produced by heat-treating the carbon carriers at a high temperature in an inexpensive ammonia gas atmosphere.

2.1. Ammonia treatment step

As described above, the purpose of ammonia treatment step is to introduce some functional groups which can adsorb platinum salt onto surface of carbon carriers. The present step is performed by heat-treating carbon carriers in an ammonia gas atmosphere.

The carbon carriers used in the method for production of the present invention may be, but are not limited to, any conductive substance capable of supporting platinum particles that precipitate in the heat treatment step. A variety of materials commonly used in electrode catalysts for a fuel cell can be employed. A preferred carrier material for supporting platinum particles is conductive and has a large specific surface area, such as carbon black. In a specific embodiment, the specific surface area of carbon carrier preferably ranges from 200 to 2,000 $m^2$/g. A specific surface area of carbon carrier can be measured in accordance with $N_2$ adsorption (commonly known as BET method). Examples of the preferred carrier material include Ketjen EC® carbon powder (Ketjen Black International Company), Ketjen 600JD® carbon powder (Ketjen Black International Company), and Black Pearls® carbon powder (Cabot Corporation), but not limited thereto.

Ammonia gas used in the method for production of the present invention may be selected for providing carbon carriers with an effect of strongly adsorbing a platinum salt. Such strong adsorption effect is attributable to, for example, chemically modifying surface of carbon carriers using ammonia gas and introducing functional groups derived from the gas onto the surface thereof. In the method for production of the present invention, the composition of ammonia gas preferably ranges from 20 to 100%. In case that the composition of ammonia gas is lower than 100%, inert gases as described below are preferable as the remainder of the composition thereof.

In the method for production of the present invention, the ammonia treatment step is performed by heat-treating carbon carriers in an ammonia gas atmosphere. The purpose of the heat treatment is to introduce some functional groups derived from the gas to carbon carriers, and the heat treatment is preferably performed at a high temperature in order to achieve reduction in size of the platinum particles. In the present step, the heat treatment is preferably performed at a temperature ranging from 600 to 1000°C. The period of the heat treatment preferably ranges from 10 to 120 minutes.

In the ammonia treatment step, it is preferable that a temperature elevation step is performed before high-temperature heat treatment and/or a cooling step is performed after the high-temperature heat treatment. The temperature elevation step and/or the cooling step is preferably performed in an inert gas atmosphere such as nitrogen.

In a specific embodiment, the temperature elevation step is preferably carried out so that the temperature is elevated to the heat treatment temperature at a temperature elevation rate ranging from 100 to 800°C/hr. In a specific embodiment, the temperature elevation step is preferably performed in an inert gas atmosphere such as nitrogen or the like. The cooling step is also preferably performed in an inert gas atmosphere such as nitrogen or the like.

It is preferable that the ammonia treatment step is continuously performed in a heat treatment furnace capable of controlling gas flow rate and temperature elevation rate. Such apparatus has been commonly used in the art, and use of such apparatus allows the temperature elevation step and/or the cooling step to be performed under desired temperature gradient and gas atmosphere conditions.

2.2. Platinum salt contact step

The purpose of platinum salt contact step is to establish a condition in which carbon carriers treated with ammonia strongly adsorb a platinum salt. The present process is performed by mixing the carbon carriers treated with ammonia with a solution prepared by dissolving a platinum salt in a solvent and bringing the platinum salt coming into contact with the carbon carriers in the mixture that has been formed.

The platinum salt used in the method for production of the present invention may be, but is not limited to, any substance that can be dissolved in a solvent used in the present step and precipitated on surface of carbon carriers in the heat treatment step. In a specific embodiment, a preferred is platinum (II) acetylacetonate ($Pt(C_5H_7O_2)_2$).

The solvent used in the method for production of the present invention may be, but is not limited to, any substance that can dissolve the platinum salt used in the present step. It is possible to use a variety of solvents that achieve the purpose in accordance with a platinum salt to be used. A highly volatile organic solvent is preferably used because it can readily be removed. In a specific embodiment, a preferred solvent is tetrahydrofuran or ethanol.

The mixture formed in the method for production of the present invention contains a platinum salt dissolved in the solvent and carbon carriers dispersed therein. A composition ratio of a platinum salt to carbon carriers in the mixture can be a factor that defines the density of platinum particles supported on the carbon carriers which is indicative of the amount of platinum finally supported thereon. It is therefore possible to set a variety of compositions in accordance with desired densities of platinum particles. In a specific embodiment, the composition of the platinum salt with respect to the carbon carriers in weight preferably ranges from 10 to 60 wt%.

The platinum salt contact step includes the step of dispersing the carbon carriers in the mixture. Dispersing carbon carriers, which are present in an insoluble form, allows platinum salt to come into contact with surface of the carbon carriers. To disperse carbon carriers, any method that achieves uniform dispersion and is commonly used in the art can be employed, such as ultrasonic treatment, agitation or circular shaking using an agitator, and agitation using a reciprocating shaking apparatus. A preferred method is ultrasonic treatment. In a specific embodiment, the treatment period of the present step preferably ranges from 10 to 120 minutes.

2.3. Recovery step

In the recovery step, a solvent is removed from the mixture of the carbon carriers and the platinum salt, and thereby the carbon carriers having platinum salt held thereon are recovered. The removal of a solvent performed in the recovery step includes removing the solvent until the solvent is not present at all or present in a concentration wherein the solvent does not substantially affect the following heat treatment step.

The removal of a solvent can be performed in accordance with any method commonly used in the art, such as evaporation, filtration, and desiccation under reduced-pressure. A preferred method is evaporation. Evaporation using a rotary evaporator is more preferable.

2.4. Heat treatment step

In the heat treatment step, metallic platinum particles are obtained by thermally reducing platinum salt adsorbed and held on surface of carbon carriers.

The inert gas used in the method for production of the present invention may be, but is not limited to, any gas whose components do not react with materials of electrode catalyst or any substance that does not cause any reaction which substantially affects the performance of the electrode catalyst. Any inert gas commonly used in the art can be employed. Examples of preferred gases include nitrogen, argon gas, and helium gas.

In the method for production of the present invention, to prevent platinum particles from sintering, the heat treatment step is preferably performed at a temperature at which not only is the adsorption effect on platinum salt held on surface of carbon carriers but also thermal reduction of the platinum can proceed. In the present step, the heat treatment is preferably performed at a temperature ranging from 200 to 800°C. The period of the heat treatment preferably ranges from 10 to 120 minutes. The present step is preferably performed in a heat treatment furnace capable of controlling the gas flow rate and temperature elevation rate, as in the ammonia treatment step.

As described above, in the method for producing an electrode catalyst for a fuel cell according to the present invention, heat-treating carbon powder treated with ammonia and platinum allows fine platinum particles to be supported on surface of the carbon in a highly dispersed manner. In the method for production of the present invention, the preferred effect described above can be obtained by heat-treating carbon carriers at a high temperature in an inexpensive ammonia gas atmosphere. The electrode catalyst obtained in accordance with the method for production of the present invention has a large electrochemical surface area of platinum and excellent catalytic activity. It is therefore possible to provide a fuel cell which uses a reduced amount of platinum but still shows high electricity generation efficiency.

The present invention will be described below in more detail with reference to Examples and Comparative Examples, but the present invention is not limited thereto.

[Example 1]

(Ammonia treatment step)

Ketjen EC® (Ketjen Black International Company) (specific surface area: 800 $m^2/g$) was used as supporting carbon powder. First, 0.5 g of the carbon powder was put in a quartz boat, and then the carbon powder was placed in a horizontal heat treatment furnace. The temperature was elevated to 800°C at a temperature elevation rate of 800°C/hr, and nitrogen gas was introduced into the furnace at a flow rate of 0.2 l/hr at the same time. After the temperature in the furnace reached 800°C, ammonia ($NH_3$) gas was added to the nitrogen gas with a flow rate of 0.2 l/hr so that a $NH_3/N_2$ ratio of 50% is obtained. The carbon powder was held at 800°C for 30 minutes in the ammonia gas atmosphere so that the carbon powder was treated with ammonia. After the treatment was completed, the introduced gas was switched again to pure nitrogen gas, which was introduced into the furnace at a flow rate of 0.2 l/hr to cool the carbon powder to room temperature.

(Platinum salt contact step, recovery step, and heat treatment step)

First, 0.06 g of platinum (II) acetylacetonate ($Pt(C_5H_7O_2)_2$) was dissolved in 50 ml of tetrahydrofuran (THF). Then, 0.1 g of the carbon powder treated with ammonia (Ketjen EC) was mixed with solution of the platinum (II) acetylacetonate in THF (the resultant density of platinum particles supported on carbon powder corresponds to 20 wt%). The mixed solution was ultrasonically suspended for 30 minutes so that the mixed solution became a uniform dispersed solution. Tetrahydrofuran was removed from the mixed solution by using a rotary evaporator so that the carbon powder therein was recovered. The recovered carbon powder was put in a quartz boat, which was then placed in a horizontal heat treatment furnace. The temperature was elevated to 400°C at a temperature elevation rate of 400°C/hr, while nitrogen gas was introduced into the furnace at a flow rate of 0.2 l/hr at the same time. After the temperature in the furnace reached 400°C, the heat treatment was performed by holding the carbon powder at 400°C for 30 minutes in the nitrogen gas atmosphere. After the heat treatment was completed, carbon powder having platinum supported thereon (Ketjen EC) was cooled to room temperature.

[Example 2]

(Ammonia treatment step)

Black Pearls® (Cabot Corporation) (specific surface area: 1500 $m^2$/g) was used as supporting carbon powder. First, 0.5 g of the carbon powder was put in a quartz boat, and then the carbon powder was placed in a horizontal heat treatment furnace. The temperature was elevated to 800°C at a temperature elevation rate of 800°C/hr, and nitrogen gas was introduced into the furnace at a flow rate of 0.2 l/hr at the same time. After the temperature in the furnace reached 800°C, ammonia ($NH_3$) gas was added to the nitrogen gas with a flow rate of 0.2 l/hr so that a $NH_3/N_2$ ratio of 50% is obtained. The carbon powder was held at 800°C for 30 minutes in the ammonia gas atmosphere so that the carbon powder was treated with ammonia. After the treatment was completed, the introduced gas was switched again to pure nitrogen gas, which was introduced into the furnace at a flow rate of 0.2 l/hr to cool the carbon powder to room temperature.

(Platinum salt contact step, recovery step, and heat treatment step)

First, 0.03 g of platinum (II) acetylacetonate ($Pt(C_5H_7O_2)_2$) was dissolved in 50 ml of tetrahydrofuran (THF). Then, 0.1 g of the carbon powder treated with ammonia (Black Pearls) was mixed with solution of the platinum (II) acetylacetonate in THF (the resultant density of platinum particles supported on carbon powder corresponds to 11 wt%). The mixed solution was ultrasonically suspended for 30 minutes so that the mixed solution became a uniform dispersed solution. Tetrahydrofuran was removed from the mixed solution by using a rotary evaporator so that the carbon powder therein was recovered. The recovered carbon powder was put in a quartz boat, which was then placed in a horizontal heat treatment furnace. The temperature was elevated to 400°C at a temperature elevation rate of 400°C/hr, while nitrogen gas was introduced into the furnace at a flow rate of 0.2 l/hr at the same time. After the temperature in the furnace reached 400°C, the heat treatment was performed by holding the carbon powder at 400°C for 30 minutes in the nitrogen gas atmosphere. After the heat treatment was completed, carbon powder having platinum supported thereon (Black Pearls) was cooled to room temperature.

[Comparative Example 1]

(Platinum salt contact step, recovery step, and heat treatment step)

First, 0.06 g of platinum (II) acetylacetonate ($Pt(C_5H_7O_2)_2$) was dissolved in 50 ml of tetrahydrofuran (THF). Then, 0.1 g of carbon powder (Ketjen EC) was mixed with solution of the platinum (II) acetylacetonate in THF (the resultant density of platinum particles supported on carbon powder corresponds to 20 wt%). The mixed solution was ultrasonically suspended for 30 minutes so that the mixed solution became a uniform dispersed solution. Tetrahydrofuran was removed from the mixed solution by using a rotary evaporator so that the carbon powder therein was recovered. The recovered carbon powder was put in a quartz boat, which was then placed in a horizontal heat treatment furnace. The temperature was elevated to 400°C at a temperature elevation rate of 400°C/hr, while nitrogen gas was introduced into the furnace at a flow rate of 0.2 l/hr at the same time. After the temperature in the furnace reached 400°C, the heat treatment was performed by holding the carbon powder at 400°C for 30 minutes in the nitrogen gas atmosphere. After the heat treatment was completed, carbon powder having platinum supported thereon (Ketjen EC) was cooled to room temperature.

[Comparative Example 2]

(Platinum salt contact step, recovery step, and heat treatment step)

First, 0.03 g of platinum (II) acetylacetonate ($Pt(C_5H_7O_2)_2$) was dissolved in 50 ml of tetrahydrofuran (THF). Then, 0.1 g of carbon powder (Black Pearls) was mixed with solution of the platinum (II) acetylacetonate in THF (the resultant density of platinum particles supported on carbon powder corresponds to 11 wt%). The mixed solution was ultrasonically suspended for 30 minutes so that the mixed solution became a uniform dispersed solution. Tetrahydrofuran was removed from the mixed solution by using a rotary evaporator so that the carbon powder therein was recovered. The recovered carbon powder was put in a quartz boat, which was then placed in a horizontal heat treatment furnace. The temperature was elevated to 400°C at a temperature elevation rate of 400°C/hr, while nitrogen gas was introduced into the furnace at a flow rate of 0.2 l/hr at the same time. After the temperature in the furnace reached 400°C, the heat treatment was performed by holding the carbon powder at 400°C for 30 minutes in the nitrogen gas atmosphere. After the heat treatment was completed, carbon powder having platinum supported thereon (Black Pearls) was cooled to room temperature.

[Evaluation of size of platinum particles]

The size of the platinum particles supported on the carbon powder obtained in each of Example 1 and Comparative Example 1 described above was measured. The size of the platinum particles was calculated from full width at half maximum (FWHM) of peak that corresponds to Pt (111) detected at approximately 40 degrees in a XRD profile, which was given by performing XRD measurement on the carbon powder having the platinum particles supported thereon, in accordance with the following Scherrer formula:

$$\text{Equation 1}$$

$$G = \frac{K\lambda}{B\cos\theta}$$

with K = 0.5, $\lambda$ = 1.5406 A and $B = \sqrt{K_1^2 - K_2^2}$ ($K_1$ - FWHM of the sample and $K_2$ - FWHM of the Bruker diffractometer

$$K_2 = 0.192\frac{\pi}{180°})$$

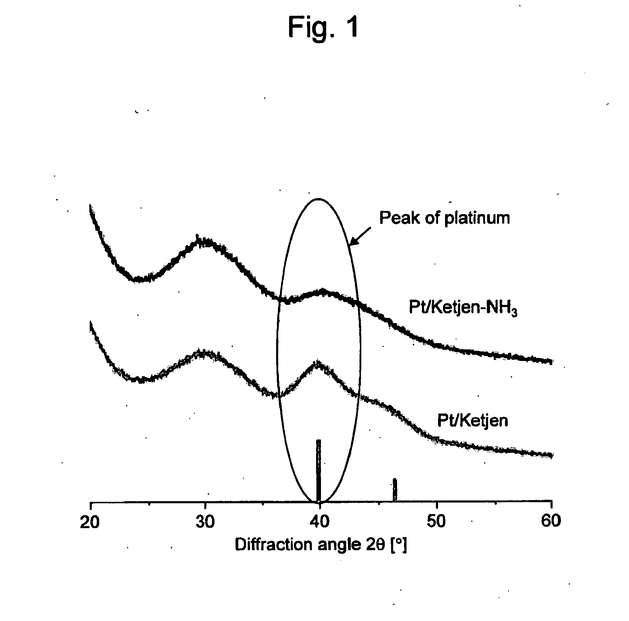

The XRD measurement was performed by scanning 2θ from 20 to 40 degrees at intervals of 0.0025 degrees (Figure 1). The FWHM in Example 1 was 3.7065, whereas that in Comparative Example 1 was 2.088. In the same condition, the particle size of platinum supported on Black Pearls (Example 2) was too small for XRD, and hence the particle size thereof could not be determined from the XRD measurement. Table 1 shows calculated sizes of the platinum particles on Ketjen EC.

Table 1

Table 1. Sizes of platinum particles supported on carbon carriers (nm).

| Carbon carrier | Non-treated | Treated with ammonia |
|---|---|---|
| Ketjen EC | 2.26 (Comparative Example 1) | 1.28 (Example 1) |

The result in Table 1 shows that the carbon powder treated with ammonia (Example 1) supports platinum particles whose size is approximately 56% relative to that of the non-treated carbon powder (Comparative Example 1). Since the density of platinum particles is the same 20 wt% in Example 1 and Comparative Example 1, the result suggests that more and smaller platinum particles are dispersedly supported on surface of each carbon carrier in Example 1 than that in Comparative Example 1. That is, the treatment of carbon carriers with ammonia prevents sintering and allows the carbon carriers to support fine platinum particles in a highly dispersed manner.

[Evaluation of catalytic activity]

The catalytic activity of the samples was characterized via cyclic voltammetry (CV) and rotating disk electrode (RDE) measurements. ' For both techniques the same conventional one-compartment electrochemical glass cell was used. A mercury sulfate electrode served as reference and a platinum wire as counter electrode. The catalyst powder was attached onto a working electrode, which consists of a PTFE surrounded glassy carbon (GC) rod with a diameter of 5 mm.

The electrode was prepared as follows: 1 mg of the catalyst sample was ultrasonically suspended in 200 $\mu$l of a 0.2% Nafion®-solution (Aldrich). A precise amount of this suspension was then transferred onto the GC electrode and dried in air at 60°C. So the final loading of the electrode is 25 $\mu$g of the catalyst.

The so prepared electrode has been cycled in a potential range from 1.5 to 0 V (NHE) ($N_2$ purged 0.5 M $H_2SO_4$ electrolyte) until the Cyclic Voltammogram (CV) curve showed a steady state characteristics (ca. 20 scans) of activated platinum. Subsequently, the electrode was used in Rotating Disc Electrode (RDE) experiments in 02 saturated 0.5 M $H_2SO_4$ electrolyte at room temperature.

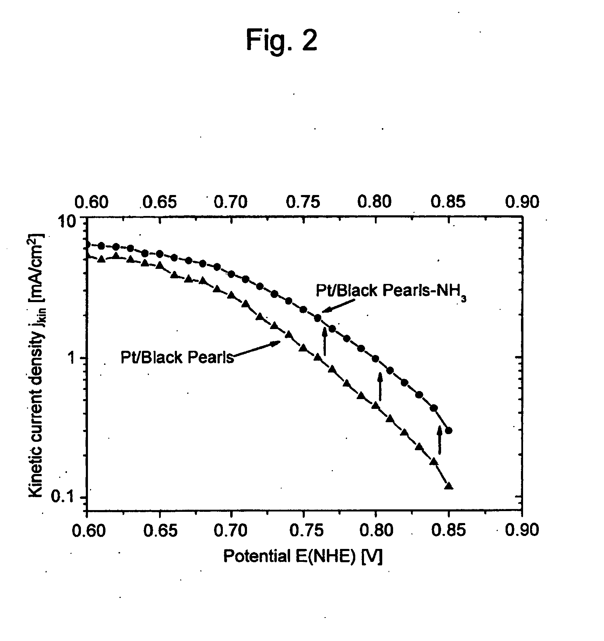

Figure 2 shows the result.

Tafel plot in Figure 2 shows that the ammonia-treated carbon powder having platinum particles supported thereon (Example 2) has higher catalytic activity and slower current attenuation associated with increase in potential than those in the non-treated carbon powder (Comparative Example 2).

The electrochemical surface area of platinum particles in each electrode catalyst was calculated from $H_2$ desorption peak obtained by CV measurement thereof. Higher $H_2$ desorption peak of platinum particles may be considered as larger electrochemical surface area thereof. Table 2 shows the electrochemically accessible platinum surface area related to the weight of the catalysts. Table 2

Table 2. Electrochemical surface areas of platinum particles per gram of electrode catalysts.

| Catalyst | Platinum surface area per mass catalyst [$cm^2_{Pt}/g_{catalyst}$] |
|---|---|
| Pt/Black Pearls (11 wt% Pt) (Comparative Example 2) | 24576.76 |
| Pt/Black Pearls-NH$_3$ (11 wt% Pt) (Example 2) | 43421.56 |
| Pt/Ketjen (20 wt% Pt) (Comparative Example 1) | 12406.16 |
| Pt/Ketjen-NH$_3$ (20 wt% Pt) (Example 1) | 17902.56 |

As shown in Table 2, electrode catalysts containing ammonia-treated carbon powders (Examples 1 and 2) have larger electrochemical surface areas of platinum particles per gram of the electrode catalysts than those containing the corresponding non-treated carbon powders (Comparative Examples 1 and 2). The tendency described above was observed irrespective of the carbon powders used, that is, in both the case where Ketjen EC was used and the case where Black Pearls was used. It is believed that good characteristics described above result from improvement in chemical adsorption of a platinum salt due to modification of carbon surface with ammonia, in particular, introduction of functional groups derived from ammonia. These results suggest that uniform adsorption of platinum salt onto surface of carbon carriers in the platinum salt contact step advantageously prevents adjacent platinum particles from sintering in the following heat treatment step. Such advantageous effect allows the size of the platinum particles supported on the surface of the carbon carriers to be reduced (see Table 1), and the platinum particles to be supported thereon in a highly dispersed manner without reduction in the density of the platinum particles. Accordingly, the electrode catalysts containing the ammonia-treated carbon powders (Examples 1 and 2) have larger surface areas of platinum particles than those containing the corresponding non-treated carbon powders (Comparative Examples 1 and 2), which are defined as the electrochemical surface areas of platinum particles per gram of the electrode catalysts. It is further believed that the improvement in electrochemical surface area contributes to the improvement in catalytic activity (see Figure 2).

Industrial Applicability

The present invention can provide a method for production of an electrode catalyst used in a fuel cell, carbon carriers having fine platinum particles supported thereon.

**Claims**

1. A method for producing an electrode catalyst for a fuel cell, the method comprising:

    an ammonia treatment step of heat-treating carbon carriers in an ammonia gas atmosphere, wherein the ammonia treatment step includes the step of holding the carbon carriers at a temperature ranging from 600 to 1000°C for 10 to 120 minutes in the ammonia gas atmosphere;
    a platinum salt contact step of mixing the carbon carriers treated with ammonia with a solution prepared by dissolving a platinum salt in a solvent and bringing the platinum salt coming into contact with the carbon carriers in the mixture that has been formed;
    a recovery step of recovering the carbon carriers by removing the solvent from the mixture; and
    a heat treatment step of heat-treating the recovered carbon carriers in an inert gas atmosphere, wherein the heat treatment step includes the step of treating the carbon carriers recovered in the recovery step at a temperature ranging from 200 to 800°C for 10 to 120 minutes in the inert gas atmosphere.

2. The method according to claim 1,
    wherein the platinum salt contact step includes a process in which the mixture undergoes ultrasonic treatment.

3. The method according to any one of claims 1 and 2,
    wherein the platinum salt is platinum (II) acetylacetonate.

**Patentansprüche**

1. Verfahren zum Herstellen eines Elektrodenkatalysators für eine Brennstoffzelle, wobei das Verfahren aufweist:

    einen Ammoniak-Behandlungsschritt, bei dem Kohlenstoffträger in einer Ammoniakgasatmosphäre wärmebehandelt werden, wobei der Ammoniak-Behandlungsschritt den Schritt des Haltens der Kohlenstoffträger in der Ammoniakgasatmosphäre für 10 bis 120 Minuten bei einer Temperatur zwischen 600 und 1000°C beinhaltet;
    einen Platinsalzkontaktschritt des Mischens der mit Ammoniak behandelten Kohlenstoffträger mit einer Lösung, die erzeugt wird, indem ein Platinsalz in einem Lösungsmittel aufgelöst wird, und bei dem das Platinsalz, das mit den Kohlenstoffträgern in Berührung kommt, in die erzeugte Mixtur eingebracht wird;
    einen Rückgewinnungsschritt des Rückgewinnens der Kohlenstoffträger durch Entfernen des Lösungsmittels aus der Mischung; und
    einen Wärmebehandlungsschritt des Wärmebehandelns der rückgewonnenen Kohlenstoffträger in einer Inertgasatmosphäre, wobei der Wärmebehandlungsschritt den Schritt des Behandelns der in dem Rückgewinnungsschritt rückgewonnenen Kohlenstoffträger für 10 bis 120 Minuten bei einer Temperatur zwischen 200 und 800°C in der Inertgasatmosphäre beinhaltet.

2. Verfahren nach Anspruch 1,
    wobei der Platinsalzkontaktschritt einen Prozess beinhaltet, bei dem die Mixtur einer Überschallbehandlung unterzogen wird.

3. Verfahren nach einem der Ansprüche 1 und 2,
    wobei es sich bei dem Platinsalz um Platin-(II)-Acetylacetonat handelt.

**Revendications**

1. Procédé de production d'un catalyseur pour électrode destiné à une pile à combustible, le procédé comprenant :

    une étape de traitement avec de l'ammoniac comprenant le traitement thermique de supports de carbone sous une atmosphère d'ammoniac gazeux, dans laquelle l'étape de traitement avec de l'ammoniac comprend l'étape de maintien des supports de carbone à une température de 600 °C à 1000 °C pendant 10 à 120 minutes sous une atmosphère d'ammoniac gazeux ;

une étape de contact avec un sel de platine comprenant le mélange des supports de carbone traités avec de l'ammoniac avec une solution préparée par la dissolution d'un sel de platine dans un solvant et la mise en contact du sel de platine avec les supports de carbone dans le mélange qui a été formé ;

une étape de récupération comprenant la récupération des supports de carbone par l'élimination du solvant du mélange ; et

une étape de traitement thermique comprenant le traitement thermique des supports de carbone récupérés sous une atmosphère de gaz inerte, dans laquelle l'étape de traitement thermique comprend l'étape de traitement des supports de carbone récupérés dans l'étape de récupération à une température de 200 °C à 800 °C pendant 10 à 120 minutes sous une atmosphère de gaz inerte.

2.  Procédé selon la revendication 1,
    dans lequel l'étape de contact avec un sel de platine comprend un procédé dans lequel le mélange subit un traitement par ultrasons.

3.  Procédé selon l'une quelconque des revendications 1 et 2,
    dans lequel le sel de platine est l'acétyl-acétonate de platine (II).

# Fig. 1

Peak of platinum

Pt/Ketjen-NH$_3$

Pt/Ketjen

Diffraction angle 2θ [°]

# Fig. 2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003242987 A
- JP 2004335252 A
- JP 2006346571 A

**Non-patent literature cited in the description**

- **JAOUEN F.** Oxygen reduction catalysts for polymer electrolyte fuel cells from the pyrolysis of iron acetate adsorbed on various carbon supports. *OURNAL OF PHYSICAL CHEMISTRY. B, MATERIALS, SURFACES, INTERFACES AND BIOPHYSICAL, WASHINGTON, DC, US,* 13 February 2003, vol. 107, ISSN 1089-5647, 1376-1386